# EUROPEAN PATENT SPECIFICATION

(11) **EP 1 198 045 B1**
(45) Date of publication and mention of the grant of the patent: **08.12.2004**
(21) Application number: 01308647.5
(22) Date of filing: 10.10.2001
(51) Int. Cl.: H02G 3/04

(54) **Cable tray**
Kabelrinne
Chemin de câbles

(30) Priority: 11.10.2000 GB 0024988
(43) Date of publication of application: 17.04.2002
(73) Proprietor: SWINTEX LIMITED, Bury Lancashire BL9 9NX (GB)
(72) Inventor: Houghton, Harry Vincent, Egerton, Bolton BL7 9EW (GB); Wallwork, Peter, Harwood, Bolton BL2 4JG (GB); Snowden, David, Great Sutton, South Wirral CH66 2GH (GB)
(74) Representative: Wilson Gunn M'Caw

(56) References cited:
- EP-A- 0 428 896
- CH-A- 634 178
- DE-A- 3 310 999
- DE-A- 4 307 260
- GB-A- 2 314 903
- US-A- 3 906 146
- US-A- 4 354 774

## Description

The present invention relates to a cable tray.

Cable trays are used in a variety of applications to support and protect cables, for example cables running from a cabin to a mobile telecommunications antenna on the flat roof of a building.

Conventional cable trays are formed from perforated sheet metal of square U-shaped cross-section. Individual trays are bolted together and usually mounted on separate support posts or other structures to raise them from the surface over which cables are to be conducted. Cables are laid into the channel formed by the tray and secured in place with ties passing through perforations in the metal sheet or clamps connected to the tray by threaded rods/bolts. Assembly of this type of cable tray can be costly, inconvenient and time consuming. This is especially so as skilled labour is often required to construct and install the cable trays.

Another known type of cable tray is formed from a rubber material. It is formed as a slab with channels running along its length. The channels are intended for receiving individual cables. As cable sizes and the combination of cable sizes in a particular installation varies it is necessary for many different types of tray to be produced for use in different circumstances. This is inconvenient and can lead to inventory problems for installers. The rubber trays have a flat underside and are usually placed directly onto a surface. This leads to three further problems. If water builds up on the surface on which a tray is placed it can enter the tray either through joints between individual tray sections or through drainage holes in the trays. The result is that cables in the tray may end up being immersed in water. This is undesirable. To avoid this it is necessary to raise the tray from the surface over which it runs. This is conventionally achieved in the same way as for perforated metal sheet trays, by supporting the tray on separate posts. This is inconvenient, especially on roof top installations where care must then be taken to spread the load placed on the roof through the posts to avoid damaging the roof. Another problem is that a cable tray installation placed onto a surface can form a dam to water on that surface, especially with the accumulation of debris, for example leaves, adjacent and under the trays. This is also undesirable. The third problem is that cable trays which are simply placed onto a surface must have sufficient mass to ensure stability. This can be expensive in terms of both material and transport costs.

Cable installations often include changes in height. Ideally therefore an associated cable tray installation should also change height so that the cable is supported and/or protected throughout its length. Accommodating the transition in height is difficult with conventional cable trays, so much so in fact that cable trays are often not installed where a cable installation changes height and cables are thus left exposed in such regions. This is undesirable.

DE3310999 discloses a cable duct moulded body having a lower part and an upper part which has a greater height, both of which consist of corrugated steel sheets which are bent into a groove shape and have corrugations running at right-angles to the longitudinal direction of the moulded body. The edges of the upper part which are offset inwards over shoulders, engage between the inwardly offset edges.

Embodiments of the present invention have been made in consideration of the above and other problems associated with conventional cable trays.

According to an aspect of the invention there is provided a cable tray comprising means for receiving ballast and characterised in that the underside of the cable tray is substantially flat and includes one or more channels to allow water to pass through the tray from one side to the other.

This enables a lightweight cable tray to be manufactured and transported and subsequently weighted down when installed.

The means for receiving ballast may comprise one or more receptacles. Suitable ballast includes sand and gravel.

In one embodiment a cable tray comprises a number of open box structures which may serve as a means for receiving ballast. The box structures may include internal webs to increase their rigidity. In this case the upper edges of the sides of the box structures and/or webs form at least part of a surface for supporting cables.

It is desirable that the centre of mass of a cable tray is as low as possible. It is therefore desirable that any ballast may be retained below the level of any cables supported on the tray. This enhances the stability of the cable tray and is particularly advantageous where a cable tray is used as a walkway.

Preferably, the cable tray is formed in one piece, and may be moulded from a plastics material, such as recycled plasticized PVC. The material preferably has a Shore hardness of at least 60, but less than 95.

The cable tray preferably includes one or more separately formed cable guides which guides may be mounted on a surface comprised in the cable tray for supporting cables.

Thus, a standard cable tray may be fitted with a cable guide appropriate for a particular installation and that installation's specific cable sizes. As only different cable guides need to be produced rather than entire cable trays complexity of manufacture and inventory control is reduced.

The cable guide and cable tray preferably respectively comprise engageable formations, which may comprise one or more projections and corresponding apertures for receiving those projections. The cable guide and cable tray are preferably arranged to engage with a snap fit. The cable guide and tray may be releasably engageable. Preferably no special tools are required to engage or release a cable guide and cable tray.

The cable guide preferably defines a plurality of slots for receiving cable. The slots may be arranged to capture or otherwise retain cable. The slots may be formed by resilient fingers. In one embodiment the cable guide comprises a clamp. The cable guide is preferably moulded from plastics material.

The cable tray preferably includes a plurality of spaced apart formations for receiving cable guides. It is easier to install a cable into a number of spaced apart guides than the continuous channels of the prior art.

The surface for supporting cables is preferably bounded on each of two opposite sides by two substantially parallel side walls. As the underside of the cable tray is substantially flat, it spreads the load exerted by the tray. The surface on which cables may be supported is preferably spaced above the underside of the tray by at least 40mm, more preferably at least 75mm. This reduces the risk of cable supported in a cable tray from becoming submerged, and obviates the need for separate support posts.

The one or more channels formed in the underside of the cable tray allow water to pass through the cable tray. This reduces the likelihood of a cable tray installation acting as a dam.

Preferably the cable tray is arranged to be engaged with other similar trays. In this regard opposite ends of the tray preferably respectively comprise engageable formations. Such formations allow trays to be engaged with each other end to end. The formations are preferably arranged to restrict relative movement of two engaged trays in three mutually orthogonal directions.

The cable tray is preferably arranged to nest with other similar trays when stacked. This helps reduce transport costs.

The cable tray preferably includes a cover. The cover may include projections arranged to be received into a slot in each side wall of the cable tray with an interference fit.

The cable tray may be flexible.

A flexible cable tray may adopt a curved configuration in order to allow for transition between cable trays mounted at different angles and different heights to each other.

Preferably the cable tray comprises a surface for supporting cables and the cable tray is preferentially flexible along the general direction in which cables are intended to run on the supporting surface, for example the flexibility may be such that the cable tray may be flexed so that opposite ends of the supporting surface lie at spaced apart points in a plane at right angles to the supporting surface. The cable tray preferably resists flexing in directions other than those which are preferentially flexible. Preferably the supporting surface is generally rectangular and cables are intended to run in a direction parallel to the two longer sides of the rectangle. In this instance the tray is preferably preferentially flexible along a direction parallel to the two longer sides of the rectangle.

The supporting surface is preferably bounded on each of two opposite sides by a side wall. The side wall preferably extends at substantially right angles from the supporting surface. The side walls preferably include one or more notches to enable it to adopt a curved configuration. The edges of the side walls defining the one or more notches are preferably arranged to abut one another when the cable tray is flexed so as to close the notches.

The size and number of the notches may be chosen to limit the radius of curvature of the surface. This is advantageous as it enables the minimum radius of cables supported on the cable tray to be limited, reducing the risk of damage to a cable.

It is to be appreciated that certain features of any aspect of the invention which may or may not be described in the context of the same embodiment either in the foregoing or following specific description may be provided in any suitable combination in a single embodiment falling within the scope of the following claims.

In order that the invention may be more clearly understood embodiments thereof will now be described by way of example with reference to the accompanying drawings of which:
- Figure 1: is a plan view of an embodiment of a cable tray according to the invention;
- Figure 2: is a side elevation of the cable tray of Figure 1;
- Figure 3: is an end elevation of the cable tray of Figure 1;
- Figure 4: is a side elevation of a cable guide for use in the cable tray of Figure 1;
- Figure 5: is an end elevation of the cable guide of Figure 4;
- Figure 6: is a plan view of a cover for use with the cable tray of Figure 1;
- Figure 7: is an end elevation of the cover of Figure 6;
- Figure 8: is an underplan view of the cover of Figure 6; and
- Figure 9: is a side elevation of the cover of Figure 6.

In the drawings hidden detail is shown by broken lines.

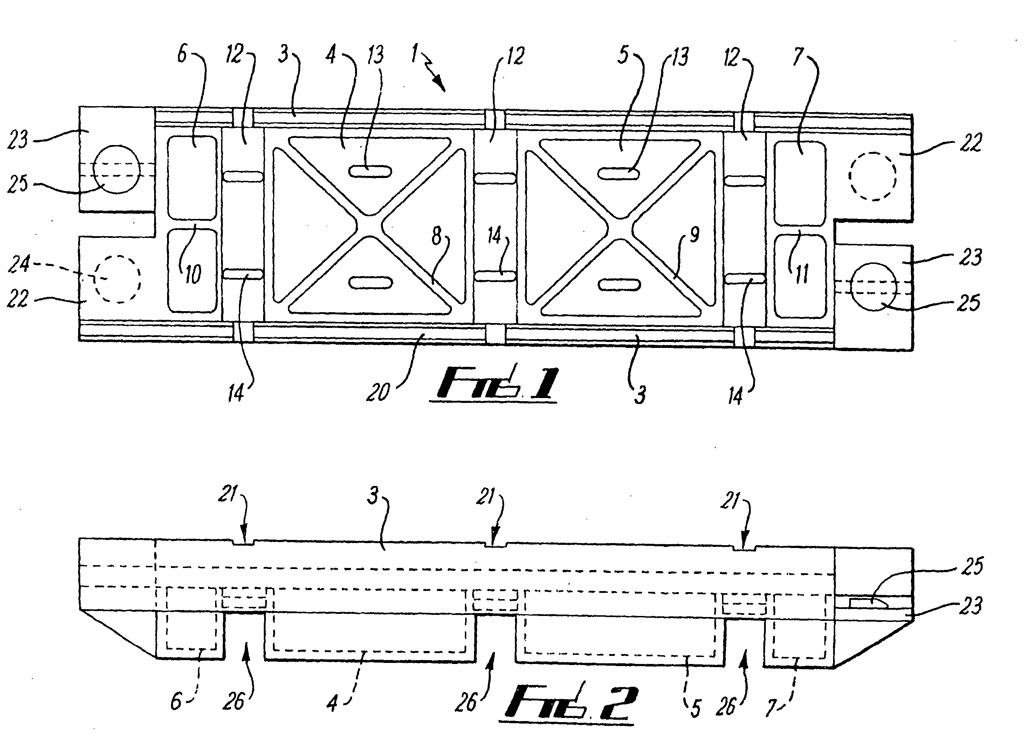

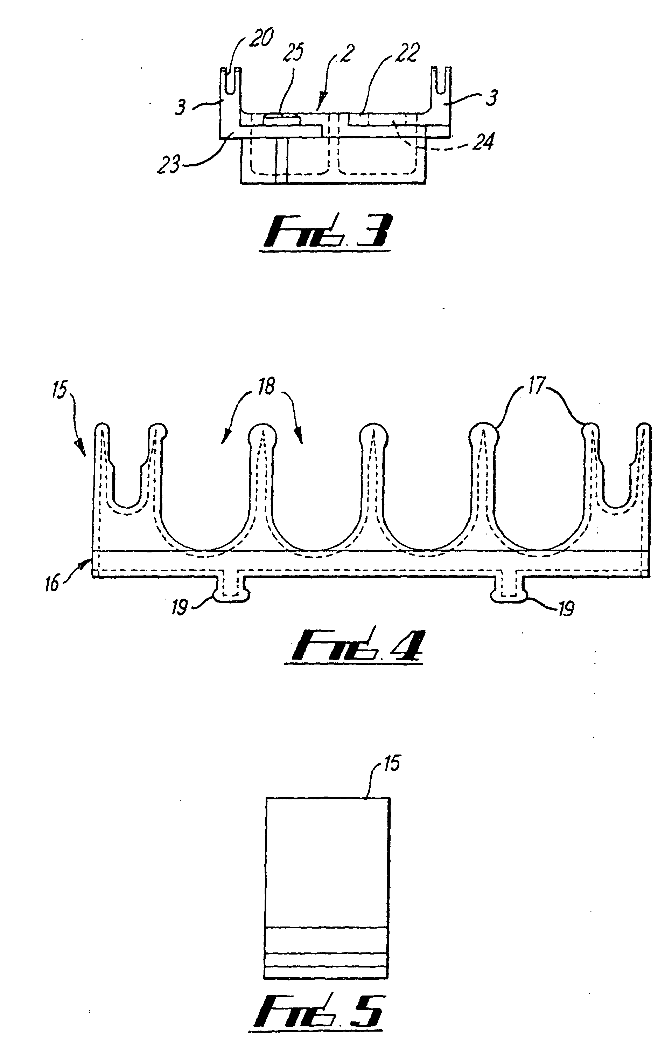

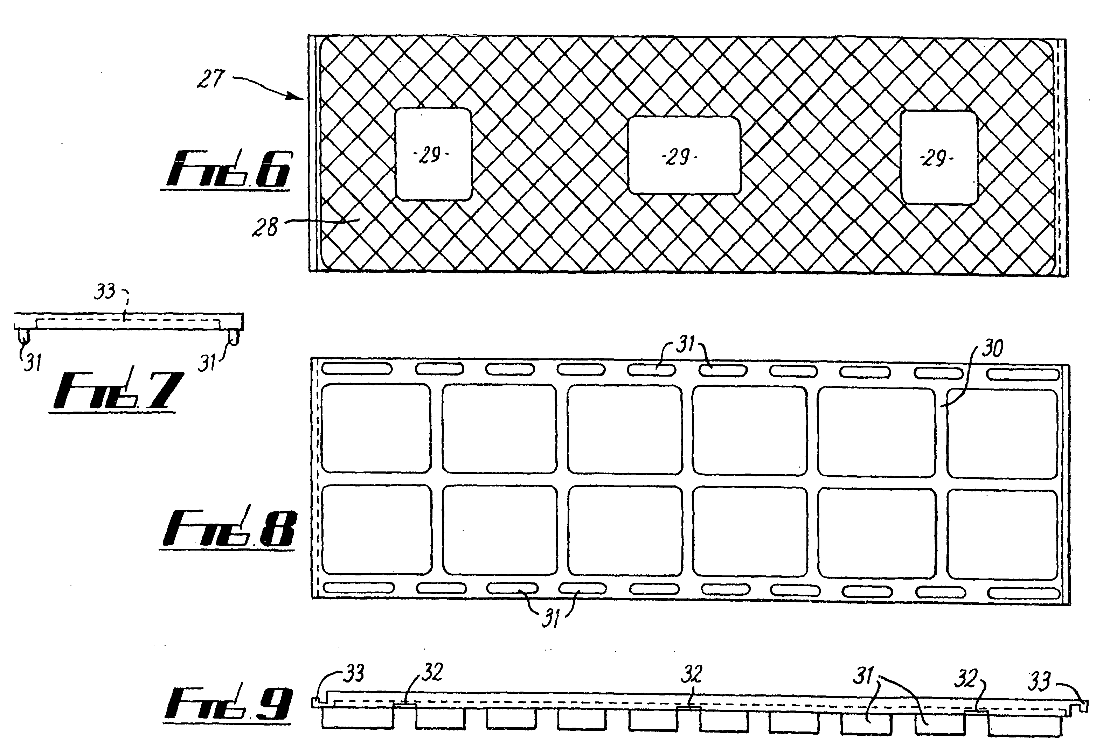

Referring to Figures 1 to 3 a cable tray 1 is moulded in one piece from recycled plasticized PVC with a Shore hardness of about 80.

The cable tray 1 comprises an elongate generally rectangular platform surface 2 bordered on each of its two longer sides by substantially parallel side walls 3. The platform surface 2 and side walls 3 together define a channel in which cables may lie, supported on the platform surface 2.

The platform surface 2 is formed by the upper edges of four open topped box structures 4,5,6,7, the upper edges of webs 8,9,10,11 extending in the box structures 4,5,6,7 and webs 12 extending between the box structures 4,5,6,7. The width of the channel defined by the side walls 3 is greater than that of the outside edges of the box structures which allows cable trays to nest when stacked.

Two of the box structures 4,5 are generally square in plan view. They each include webs 8,9 extending between diagonally opposite corners of the structure, and are connected by a first web 12. The bottom of each box structure 4,5 includes two drainage apertures 13. Further webs 12 extend from the opposite side of each box structure 4,5 and connect with two further box structures 6,7 respectively. These further box structures are generally rectangular in plan view and each include a single web 10,11 extending approximately between the midpoints of their two longer sides.

The top surface of the webs 12 extending between the box structures 4,5,6,7, the top edges of the box structures 4,5,6,7 and webs 8,9,10,11 extending in the box structures lie substantially within a plane and together define the platform surface 2. The webs 12 also form part of the platform surface 2.

Each of the three webs 12 extending between the four box structures 4,5,6,7 includes two apertures 14 extending therethrough. The apertures are arranged to receive formations on a cable guide, as illustrated in Figures 4 and 5.

Referring to these Figures, the cable guide 15 is a moulded plastics component. It comprises a plate portion 16. A plurality of generally parallel fingers 17 extend away from one surface of the plate portion 16 and define a plurality of generally U-shaped slots 18 therebetween, into which cables may be received. The end of each finger 17 extending away from the plate portion 16 is rounded in cross-section and is thicker than the preceding portion of the finger 17. This narrows the slots 18 towards their open ends and enables the fingers 17, which have some resilience, to releasably capture cable inserted into the slots 18.

The illustrated cable guide 15 defines four wider and two narrower slots. Different configurations are, however, possible.

Extending away from the opposite side of the plate portion 16 to the fingers 17 are two projecting formations 19.

The formations are configured to be inserted into the apertures 14 in the cable tray 1 of Figure 1 to enable the cable guide 15 to be mounted on the cable tray 1. The ends of the formations 19 remote from the plate portion 16 are thicker than the remainder of the formations 19. This, in combination with some resilience in the materials from which both the cable guide 15 and tray 1 are made, enables the cable guide 15 to be securely engaged with the cable tray, whilst remaining removable therefrom. Using different configurations of cable guide enables a single type of tray to be used to support a number of different configurations of cable.

Referring back to Figures 1 to 3, the side walls 3 each include a channel 20 in their top surface for receiving an earthing rod or wire (not shown). The top surface of each side wall 3 is cut away at three points 21 along its length. These points are located where a cable guide can be mounted on the cable tray and permit a conduction strap to pass out of the channel 20 in the wall 3 when a cover is placed over the cable tray.

In an alternative embodiment the side walls are cut away at intervals to a greater extent than shown in the drawings. The resulting slots allow fastening means, for example suitable metal spring clips, to be introduced to allow cable trays to be fastened together side to side to increase the width of cable supporting surface in a given installation.

At each end of the cable tray 1 means are provided to engage the cable tray 1 with another similar cable tray. This means comprises first 22 and second 23 plates located at opposite lateral sides of each longitudinal edge respectively of the cable tray. The top surfaces of the first plates 22 lie substantially in the plane of the platform surface 2 and form a part of that surface. The side walls 3 extend along the side of each first plate 22. The underside of each first plate 22 includes a substantially circular recess 24.

The top surface of the second plates 23 lies substantially in the plane of the bottom surface of each first plate 22. Projecting above the top surface of each second plate 23 is a substantially cylindrical projection 25 the edge of which directed away from the cable tray 1 is bevelled. Each second plate 23 is supported by a triangular bracket portion 26 of the cable tray, extending between the underside of each plate and a side wall of the outermost boxed structures 6,7.

When two cable trays are placed end to end and pushed together so that the ends of their respective side walls 3 abut the first plate 22 of each cable tray will ride over the second plate 23 of the other tray, facilitated by the bevelled edge of the substantially cylindrical projections 24, until each substantially cylindrical portion 24 is received into the recess on the underside of each first plate 22, engaging the two cable trays together in a releasable manner. It will be seen that when two cable trays are engaged relative movement of the two cable trays in three mutually orthogonal directions is substantially prevented. Engagement and disengagement of the trays is, of course, dependent on some resilience in the material from which the trays are made.

In use a number of cable trays would typically be joined together to support cables, for example on a flat roof between a cabin and antenna. The cable trays do not normally require anchoring, trays of 1 metre length usually have a mass of about 15kg. However, if necessary, ballast such as sand or gravel may be introduced into the box structures 4,5,6,7. Suitable cable guides are mounted on the cable tray prior to installation of cable, these serve to align and space apart the cables being supported. It is not necessary for a cable guide to be mounted in every available position on a particular cable tray.

The box sections 4,5,6,7 serve to raise the platform surface 2 for supporting cables well above the surface on which the cable tray is itself supported, reducing the risk of cables supported by the tray from becoming submerged. In the illustrated embodiment the platform surface 2 is about 80mm above the underside of the cable tray.

The channels 26 between the box structures 4,5,6,7 allow water to pass through the cable tray, preventing a line of joined cable trays from damming water which is usually undesirable.

The structure of the cable tray, in particular the inclusion of box structures with internal webs, makes the tray quite rigid. There is however a degree of flexibility in the material which also exhibits some creep. This allows the tray to adapt somewhat to uneven surfaces, so that it places an even load on the surface on which it is supported.

Referring to Figures 6 to 9 there is shown a cover 27 for the cable tray of Figures 1 to 3. The cover 27 is also moulded from recycled plasticized PVC. The top surface includes a non-slip relief pattern 28 and three non-patterned areas 29 for carrying indicia. The underside includes a number of intersecting ribs 30 forming a grid pattern to add rigidity to the cover 27. The underside also includes a number of spaced apart tongues 31 arranged in two substantially parallel rows along opposite longitudinal edges respectively of the cover. The tongues 31 are arranged to be received into the slot 20 of each side wall 3 of a cable tray with an interference fit, to releasably retain the cover 27 on a tray. Some spaces between the tongues 31 coincide with a cut-out 32 in the underside of the cover. These correspond to the positions of the cut-outs 21 in the side walls of the cable tray 1.

Opposite lateral ends of the cover are formed into mutually cooperating formations 33 to enable adjacent ends of covers to be engaged with each other to reduce the ingress or moisture and the like as compared with simply abutting edges.

The above embodiments are described by way of example only. Many variations are possible without departing from the invention as defined by the following claims.

## Claims

1. A cable tray (1) comprising means (4,5,6,7) for receiving ballast and **characterized in that** the underside of the cable tray is substantially flat and includes one or more channels (26) to allow water to pass through the tray from one side to the other.

2. A cable tray according to claim 1, wherein the means for receiving ballast comprises one or more receptacles.

3. A cable tray according to either claim 1 or 2, wherein the means for receiving ballast comprises one or more open topped box structures.

4. A cable tray according to claim 3, wherein at least one box structure includes internal webs (8,9,10,11).

5. A cable tray according to either claim 3 or 4 comprising a surface (2,34) for supporting cables wherein at least part of the surface is formed by upper edges of the box structures and/or webs.

6. A cable tray according to any of claims 3 to 5, wherein the underside of the cable tray is formed by the box structures.

7. A cable tray according to any preceding claim, wherein ballast may be retained below the level of cable supported on the tray.

8. A cable tray according to any preceding claim formed in one piece.

9. A cable tray as claimed in any preceding claim having one or more separately formed cable guides (15) mounted thereon.

10. A cable tray according to claim 9, wherein the cable tray and one or more cable guides respectively comprise engageable formations (14,19) which enable the one or more guides to be releasably mounted on the tray.

11. A cable tray according to claim 10 wherein the cable tray includes a plurality of spaced apart formations for receiving cable guides.

12. A cable tray according to any of claims 9 to 11, wherein the one or more cable guides each define a plurality of slots (18) for receiving cable.

13. A cable tray according to any of claims 9 to 12, wherein the one or more cable guides each define a clamp.

14. A cable tray according to any preceding claim, wherein opposite ends of the tray respectively comprise engageable formations (22,23,24,25,36) allowing trays to be engaged with one another end to end, the formations being arranged to restrict relative movement of two engaged trays in three mutually orthogonal directions.

15. A cable tray according to any preceding claim arranged to nest with other similar trays.

16. A cable tray according to any preceding claim comprising a surface for supporting cables bounded on each of two opposite sides by substantially parallel side walls (3,35) and fitted with a cover (27), the cover including projections (31) received into a slot (20) in each side wall.

## Patentansprüche

1. Kabelrinne (1) mit einem Mittel (4, 5, 6, 7) zur Aufnahme von Ballast, **dadurch gekennzeichnet, dass** die Unterseite der Kabelrinne im wesentlichen flach ist und einen oder mehrere Kanäle (26) beinhaltet, um zu ermöglichen, dass Wasser, von der einen Seite zur anderen hin, durch die Rinne hindurch tritt.

2. Kabelrinne nach Anspruch 1, worin das Mittel zur Aufnahme von Ballast eines oder mehrere Behältnisse umfaßt.

3. Kabelrinne nach Anspruch 1 oder 2, worin das Mittel zur Aufnahme von Ballast eine oder mehrere, oben offene Kastenstrukturen aufweist.

4. Kabelrinne nach Anspruch 3, worin zumindest eine Kastenstruktur innere Bänder (8, 9, 10, 11) beinhaltet.

5. Kabelrinne nach Anspruch 3 oder 4, mit einer Oberfläche (2, 34) zur Abstützung von Kabeln, worin zumindest ein Teil der Oberfläche durch obere Ränder von Kastenstrukturen und/oder Bändern gebildet ist.

6. Kabelrinne nach einem der Ansprüche 3 bis 5, worin die Unterseite der Kabelrinne durch die Kastenstrukturen gebildet ist.

7. Kabelrinne nach irgendeinem vorausgehenden Anspruch, worin Ballast unterhalb des Niveaus von an der Rinne gelagertem Kabel gehalten werden kann.

8. Kabelrinne nach irgendeinem vorausgehenden Anspruch, das einstückig gebildet ist.

9. Kabelrinne wie in irgendeinem vorausgehenden Anspruch beansprucht, mit einer oder mehreren, gesondert ausgebildeten Kabelführungen (15), die an ihr angebracht sind.

10. Kabelrinne nach Anspruch 9, worin die Kabelrinne und eine oder mehrere Kabelführungen in Eingriff bringbare Ausgestaltungen (14, 19) umfassen, die es der einen oder den mehreren Führungen ermöglichen, an der Rinne abnehmbar angebracht zu werden.

11. Kabelrinne nach Anspruch 10, worin die Kabelrinne eine Mehrzahl von im Abstand voneinander befindlichen Ausgestaltungen beinhaltet, um Kabelführungen aufzunehmen.

12. Kabelrinne nach einem der Ansprüche 9 bis 11, worin die eine oder die mehreren Kabelführungen jeweils eine Mehrzahl von Schlitzen (18) zur Aufnahme von Kabel begrenzen.

13. Kabelrinne nach einem der Ansprüche 9 bis 12, worin die eine oder die mehreren Kabelführungen jeweils eine Klemme definieren.

14. Kabelrinne nach einem der vorausgehenden Ansprüche, worin zueinander entgegengesetzte Enden der Rinne jeweils in Eingriff bringbare Ausgestaltungen (22, 23, 24, 25, 36) umfassen, die ermöglichen, dass Rinnen, Ende an Ende, miteinander in Eingriff gebracht werden, wobei die Ausgestaltungen so eingerichtet sind, dass sie Relativbewegungen zweier in Eingriff befindlicher Rinnen in drei zueinander orthogonale Richtungen begrenzen.

15. Kabelrinne nach irgendeinem vorausgehenden Anspruch, die dazu eingerichtet ist, um mit weiteren ähnlichen Rinnen verschachtelt zu sein.

16. Kabelrinne nach irgendeinem vorausgehenden Anspruch, mit einer Oberfläche zur Abstützung von Kabeln, die an jeder von zwei einander entgegengesetzten Seiten durch im wesentlichen parallele Seitenwände (3, 35) umgrenzt und mit einem Deckel (27) ausgerüstet ist, wobei der Deckel Vorsprünge (31) beinhaltet, die in einem Schlitz (20) in jeder Seitenwand aufgenommen sind.

## Revendications

1. Support de câbles (1) comprenant des moyens (4, 5, 6, 7) de réception de ballast et **caractérisé par le fait que** son côté inférieur est globalement plat et présente une ou plusieurs rigoles (26) permettent à l'eau de traverser le support de câbles d'un côté à l'autre.

2. Support de câbles selon la revendication 1, dans lequel les moyens de réception de ballast sont constitués d'un ou de plusieurs réceptacles.

3. Support de câbles selon l'une des revendications 1 et 2, dans lequel les moyens de réception de ballast sont constitués d'une ou de plusieurs structures caissons ouvertes du côté supérieur.

4. Support de câbles selon la revendication 3, dans lequel au moins une structure caisson présente des nervures intérieures (8, 9, 10, 11).

5. Support de câbles selon l'une des revendications 3 et 4, présentant une surface (2, 34) destinée à supporter des câbles, au moins une partie de cette surface étant formée par des bords supérieurs des structures caissons et/ou des nervures.

6. Support de câbles selon l'une des revendications 3 à 5, dont le côté inférieur est formé par les structures caissons.

7. Support de câbles selon l'une des revendications précédentes, dans lequel le ballast peut être maintenu au-dessous du niveau des câbles supportés par le support de câbles.

8. Support de câbles selon l'une des revendications précédentes, formé d'une seule pièce.

9. Support de câbles selon l'une des revendications précédentes, sur lequel sont montés un ou plusieurs guide-câbles (15) formés séparément.

10. Support de câbles selon la revendication 9, dans lequel le support et un ou plusieurs guide-câbles présentent des bases de mise en prise (14, 19) qui permettent de monter le ou les guide-câbles de manière amovible sur le support de câbles.

11. Support de câbles selon la revendication 10, qui présente plusieurs bases espacées destinées à recevoir des guide-câbles.

12. Support de câbles selon l'une des revendications 9 à 11, où le ou les guide-câbles présentent des encoches (18) destinées à recevoir des câbles.

13. Support de câbles selon l'une des revendications 9 à 12, dans lequel le ou chaque guide-câble forme un serre-câble.

14. Support de câbles selon l'une des revendications précédentes, dont les extrémités opposées présentent chacune des bases de mise en prise (22, 23, 24, 25, 36) qui permettent de mettre des supports de câble en prise entre eux bout à bout, ces bases étant conçues pour empêcher un mouvement relatif de deux supports de câble en prise dans trois directions perpendiculaires entre elles.

15. Support de câbles selon l'une des revendications précédentes, conçu pour s'emboîter avec d'autres supports de câbles semblables.

16. Support de câbles selon l'une des revendications précédentes, présentant une surface destinée à supporter des câbles limitée sur chacun de deux côtés opposés par des parois latérales sensiblement parallèles (3, 35) et pourvue d'un couvercle (27), ce couvercle présentant des saillies (31) qui s'engagent respectivement dans des encoches (20) formées dans chaque paroi latérale.
